# EUROPEAN PATENT APPLICATION

(11) **EP 4 613 537 A1**
(43) Date of publication of application: **10.09.2025**
(21) Application number: 25161252.9
(22) Date of filing: 03.03.2025
(51) Int. Cl.: B60L 50/51, B60K 7/00, B60K 17/356, B60L 50/64, B60L 50/60, B60L 53/10, B60L 58/21, H02J 7/00, H01M 10/42

(54) **PARTITIONING A BATTERY ARRAY FOR DEDICATED POWERING OF IN-WHEEL ELECTRIC MACHINES**

(30) Priority: 04.03.2024 US 202418594399
(71) Applicant: Volvo Car Corporation, 405 31 Göteborg (SE)
(72) Inventor: SINGH, Aditya Pratap, 40531 Göteborg (SE); FORSSELL, Jonas, 40531 Göteborg (SE); LARSSON, Torbjörn, 40531 Göteborg (SE)
(74) Representative: Maiwald GmbH

(57) **Abstract**

Architectures or techniques are provided for partitioning the battery cell array of an electric vehicle into distinct battery groups or partitions that independently power in-wheel electric machines or motors in a dedicated manner. Instead of the entire battery cell array being used to power all in-wheel electric machines with independent control being managed by in-wheel inverters, the various battery partitions can be respectively dedicated to powering a different in-wheel electric machine or machines. Thus, in-wheel inverters and associated components can be removed or reduced, as independent control can be effectuated by independent partitions instead of independent inverter systems.

## Description

### TECHNICAL FIELD

The subject disclosure relates generally to electric and/or hybrid electric vehicle drive technologies, and more particularly to independently powering multiple in-wheel (e.g., in a wheel hub) electric machines from different partitions of a battery array.

### BACKGROUND

Currently, electric vehicles (EVs) are becoming increasingly popular as a more sustainable mode of transportation. Whereas internal combustion engine vehicles rely on combustion of petroleum based fuels to power a central motor that drives one or more wheels of the vehicle, EVs rely instead on energy stored in a battery array to drive the wheels. Since EV motors do not need combustion chambers and associated elements, EV motors can be significantly more compact than combustion engine motors. As one result, a recent trend in the EV domain is to replace the single, centrally located motor common to combustion engine vehicles and previous EVs with multiple electric motors that are located at or near the wheels or associated hubs. Such is referred to as in-wheel machines/motors or in-wheel hub machines/motors. In-wheel motors provide dedicated power or traction control to individual wheels, which can significantly improve handling or performance over central drive train designs.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, compact power electronics PCB technologies for controlling batteries of an electric and/or hybrid vehicle are provided.

According to an embodiment, a system can comprise a memory that stores computer executable components; and a processor that executes the computer executable components stored in the memory. The computer executable components can comprise a power supply component and an operation control component. The power supply component can power respective in-wheel electric machines of a vehicle. The power supply component can comprise an array of battery cells that are partitioned into groups of battery cells. For example, the groups can comprise a first group of cells configured to power a first in-wheel electric machine of the vehicle and a second group of cells configured to power a second in-wheel electric machine of the vehicle. Hence, the battery cell array can be divided into multiple, nonoverlapping partitions or groups such that each group can be dedicating to powering a different in-wheel electric machine that powers or controls a respective different wheel of the vehicle.

According to another embodiments, a non-transitory machine-readable medium can comprise executable instructions that, when executed by a processor, facilitate performance of operations. The operations can comprise delivering first alternating current power, sourced from a first portion of a battery array, to a first in-wheel hub motor of a vehicle. The operations can further comprise delivering second alternating current power, sourced from a second portion of the battery array that excludes the first portion, to a second in-wheel hub motor of the vehicle. Additionally, the operations can comprise changing a state of a group of relays that are electrically coupled to the battery array to facilitate different operating modes associated with charging the batteries or operating the first in-wheel hub motor or the second in-wheel hub motor.

According to yet another embodiment, a method can comprise transmitting, by a device comprising a processor, first alternating current power, sourced from a first group of battery cells, to a first in-wheel hub motor that controls a first wheel of a vehicle. The method can also comprise transmitting, by the device, second alternating current power, sourced from a second group of battery cells excluding the first group of battery cells, to a second in-wheel hub motor that controls a second wheel of the vehicle. The method can further comprise modifying, by the device, a state of a group of relays that are electrically coupled to the first group of battery cells and the second group of battery cells to facilitate different operating modes associated with charging the batteries or operating the first in-wheel hub motor or the second in-wheel hub motor.

### DESCRIPTION OF THE DRAWINGS

One or more exemplary embodiments are described below in the Detailed Description section with reference to the following drawings.
FIG. 1 illustrates an example smartcell battery system that supplies power to one or more electrical systems of an electric vehicle in accordance with one or more embodiments described herein.
FIG. 2A illustrates an example battery cell unit of a smartcell battery system in accordance with one or more embodiments described herein.
FIG. 2B illustrates another illustrates example battery cell unit in accordance with one or more embodiments described herein.
FIG. 3 depicts a schematic diagram illustrating aspects of a suspension system of a vehicle that characterizes sprung weight and unsprung weight in accordance with certain embodiments of this disclosure.
FIG. 4 depicts a schematic block diagram illustrating aspects of a battery cell array that is partitioned into respective groups that can independently power respective in-wheel electric machines in accordance with certain embodiments of this disclosure.
FIG. 5 depicts a schematic block diagram illustrating an example system that can reduce unsprung weight in a vehicle with independently controlled in-wheel electric machines in accordance with certain embodiments of this disclosure.
FIG. 6 depicts a schematic block diagram illustrating various examples of the operating modes in accordance with certain embodiments of this disclosure.
FIG. 7 depicts a schematic wiring diagram illustrating example wiring for a first embodiment in which a given battery partition is allocated or dedicated to a single in-wheel electric machine or a single type of in-wheel electric machine in accordance with certain embodiments of this disclosure.
FIG. 8 depicts a schematic wiring diagram illustrating example wiring for a second embodiment in which a given battery partition is allocated or dedicated to a multiple in-wheel electric machine or multiple types of in-wheel electric machines in accordance with certain embodiments of this disclosure.
FIG. 9 illustrates a block flow diagram for a process that can facilitate independent or dedicated AC power outputs based on partitioning techniques of a battery array in accordance with certain embodiments of this disclosure.
FIG. 10 illustrates a block flow diagram for a process that provide additional aspects or elements associated with facilitating independent or dedicated AC power outputs based on partitioning techniques of a battery array in accordance with certain embodiments of this disclosure.
FIG. 11 is an example, non-limiting computing environment in which one or more embodiments described herein can be implemented.
FIG. 12 is an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

As noted in the Background section, it can be highly desirable to produce electric vehicles with in-wheel electric motors and/or in-wheel electric machines to independently control different wheels of the vehicle. Such an arrangement allows for independent power, traction control, torque, or other control for each in-wheel electric motor controlled wheel. Although in-wheel electric machines can thus be desirable, implementing in-wheel electric machines can lead to certain difficulties.

For example, in other systems, all in-wheel electric machines are powered from the same group of batteries (e.g., a battery array). Even though each individual in-wheel electric machine may, at a given moment, have different power requirements, each in-wheel electric machine typically receives the same voltage or other power characteristic from the shared battery array.

However, each in-wheel hub is accompanied by an associated inverter that can transform the power supply to the demands of the individual in-wheel electric machine. Unfortunately, placing inverters in the wheel hubs leads to a number of difficulties. Inverter systems typically comprise delicate equipment as well as cooling systems or heat sinks to allow them to function properly or remain durable and other associated elements. Packaging, sealing, or other protection technique in a manner that can withstand the stresses associated with the wheels (or other suitable location) of a vehicle can significantly increase the costs of the vehicle in addition to the added costs of the inverter systems themselves.

Moreover, inverter systems (e.g., inverters, cooling devices, packaging, ...) may take up a significant amount of space and add a non-negligible amount of weight. Thus, placement of inverter systems in wheel hubs of a vehicle along with associated in-wheel electric machines is both an expensive proposition and leads to a number of design challenges.

For example, when placed in the wheel hub, in-wheel electric machines and associated inverter systems significantly increase the unsprung mass/weight of the vehicle over comparative central motor drive train technology. Accounting for this additional unsprung mass/weight leads to re-dimensioning of the suspension and braking systems of the vehicle and can result in higher power consumption, lower acceleration, and reduced driving range.

The disclosed subject matter, in some embodiments, is directed to mitigating many of the issues that arise in in-wheel electric machine designs. For example, the disclosed techniques can leverage smartcell battery systems that can directly provide AC power output to in-wheel electric machines. Such can reduce or even eliminate all or a portion of inverter systems from the individual wheel hubs. By eliminating the inverter systems from the individual wheel hubs, both costs and unsprung mass/weight can be significantly decreased. Even though an associated inverter system is no longer utilized by the individual in-wheel electric machines, independent power output to the individual in-wheel electric machines can be maintained and precisely controlled.

In that regard, the disclosed subject matter is, in some embodiments, specifically directed to partitioning the battery array into distinct groups, potentially one partitioned group of battery cells for each actively powered in-wheel electric machine. In this manner, each partitioned group of battery cells can be dedicated to, or exclusively serve, one or more designated in-wheel electric machines. Within a partitioned group, any number of individual battery cells can be coupled or uncoupled on the fly to satisfy the demands of the associated in-wheel electric machine(s), while a different partitioned group can be operated in the same manner to satisfy the demands of a different in-wheel electric machine. Within a partitioned group, any number of individual battery cells can be coupled in series, parallel, or a combination thereof, and can provide any needed voltage or other electrical characteristic with any suitable polarity.

Hence, by partitioning the battery array in this or a similar manner, the inverter systems of in-wheel electric machines can be removed without sacrificing the ability to independently power the various in-wheel electric machines. As noted, such can significantly reduce the unsprung mass/weight of the electric vehicle and can significantly reduce production and design costs. Advantageously, the disclosed techniques can improve torque response, acceleration, and handling, reduce braking pressure and power transmission loss, and allow simplified software control, as well as other potential advantages.

The disclosed subject matter is now described with reference to the drawings, wherein like reference numerals are used to refer to like elements throughout. In the following description, for purposes of explanation, numerous specific details are set forth in order to provide a thorough understanding of the disclosed subject matter. It may be evident, however, that the disclosed subject matter may be practiced without these specific details. In other instances, well-known structures and devices are shown in block diagram form in order to facilitate describing the disclosed subject matter.

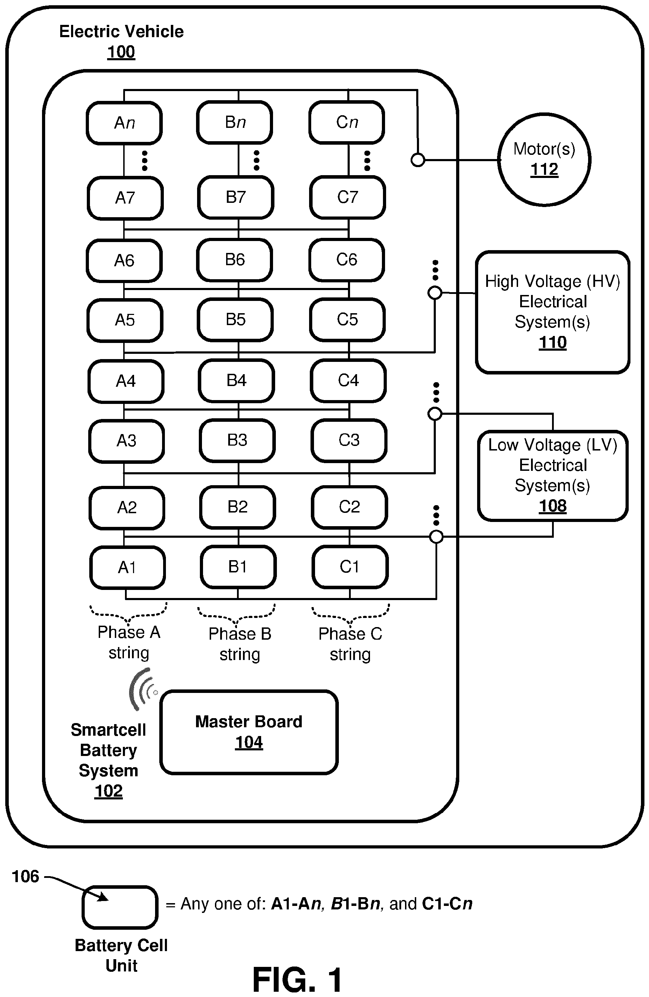

As previously discussed, the disclosed subject matter can leverage smartcell battery systems or any other suitable battery array or system by partitioning each cell of the battery array (e.g., smartcell battery system 100 of FIG. 1) into a single partitioned group that is dedicated to one or more specific in-wheel electric machines. To provide additional context, a smartcell battery system can operate to remove large and costly parts from a conventional drivetrain and use the batteries more efficiently. More particularly, a smartcell battery system can be a multilevel inverter concept that aims to replace driveline components such as the conventional large inverter by integrating those elements into printed circuit boards (PCBs) connected to clusters of battery cells. These PCBs can be connected wirelessly to a central controller that handles high level control. A given PCB can include several power electronic elements that allow intelligent control. A PCB can thus manage operations of the respective battery cells to which they are connected (e.g., rendering them "smart"). Further the PCB can enable the direct current (DC) output from a small battery cluster to be converted into an alternating current (AC) to control an electric motor through field-oriented control (FOC).

The battery array can be configured in a number of different ways depending on need for propulsion, utilization by other high and low voltage electrical systems of the vehicle and charging. Through changing the inverter switching to a smartcell system, the battery array can operate at double the voltage level of similar battery arrays using a conventional inverter, resulting in a lower current with less loss. Further only the battery cells needed are activated instead of all batteries needing to be constantly active, thereby increasing efficiency.

The design of a given PCB can include a number of aspects, including a direct current to direct current (DCDC) converter having a compact, low-cost format that can provide significant power output despite operating at low voltages. In one or more embodiments, the DCDC converter includes or corresponds to an LLC resonant converter, which provides higher switching frequencies and reduced switching losses as compared to other types of converters (e.g., flyback converters and/or forward converters). As opposed to using a prepackaged, standard DCDC converter, the disclosed techniques build the DCDC converter directly on the planar, primary substrate of the PCB in a manner that achieves better performance with fewer components and thus reduced cost. The DCDC converter includes a number of features, including but not limited to, a closed loop for the primary side winding, integrated leakage inductance, a planar integrated transformer, a modular exchangeable secondary side winding, and two variants of secondary side rectification depending on the desired output voltage. The components of the DCDC converter respectively have planar or substantially planar geometries that enable the DCDC converter to have a compact, planar geometry with an overall thickness of about 1.0 millimeters or less.

In some embodiments, the PCB also incorporates a scalable, high performance power module. The power module can include a number of power switches (e.g., metal oxide semiconductor field effect transistors (MOSFETs), field effect transistors (FETs) and the like), that have low resistance (e.g., <0.5 mOhm) which control very high currents of the DCDC converter and the H-bridge of the PCB used to control the supply of the AC current to the motor (among other functions). A traditional power module includes a separate housing, isolation between power switches (e.g., metal oxide semiconductor field effect transistors (MOSFETs), field effect transistors (FETs) and the like) and high current connections to surrounding elements. In addition, traditional MOSFET package solutions do not provide the extremely low levels of resistance needed for the smartcell system, as traditional MOSFET package solutions add more resistance to the switch than the actual MOSFET itself. The power module can contain a number of power relays or switches which can be tailored depending on the power demands of the PCB and/or an associated in-wheel electric machine.

As used herein, unless otherwise specified, terms such as on, over, above, on top, positioned/formed on, or positioned/formed atop, and the like, means that a first component is present on a second component, wherein intervening components may be present between the first component and the second component. As used herein, terms such as upper, lower, top, bottom, above, below, aligned with, adjacent to, distal, proximal, right, left, vertical, horizontal, and derivatives thereof shall relate to the disclosed structures as oriented in the drawing figures. As used herein, unless otherwise specified, the terms "surface," "side," "end," and variations thereof, as used to describe a component of a PCB device assumes the side or end is defined by a physical element or structure having at least one surface.

It will be understood that when an element is referred to as being "connected" to or "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling.

FIG. 1 illustrates an example smartcell battery system 102 that supplies power to one or more electrical systems of an electric vehicle 100 in accordance with one or more embodiments described herein. The one or more electrical systems can include one or more motors 112, one or more high voltage (HV) electrical systems 110 and/or one or more low voltage (LV) electrical systems 108. The one or more LV electrical systems 110 can include any type of electrical system associated with the electric vehicle 100 that typically consumes a DC input voltage less than about 50 volts (V) (e.g., 12V, 14V, 15V, 40V, 48V, etc.). Some examples of the LV electrical systems can include, but are not limited to, a power steering system, an autonomous driving system, an infotainment system, a navigation system, a backup camera system, and the like. The one or more HV electrical systems 110 can include any type of electrical system associated with the electric vehicle 100 that typically consumes a DC input voltage greater than about 50 V (e.g., 48V, 72V, 100 V, 400V, etc.), such as the heating, ventilation and air conditioning (HVAC) system, and others.

The one or more motors 112 (e.g., typically a single motor for a 2-wheel drive vehicle and two motors for a 4-wheel drive vehicle) can include any type of electric vehicle motor that is part the vehicle's powertrain or drive, including one or more DC motors and/or one or more AC motors. In various embodiments, the one or more motors 112 can include or correspond to a three-phase electric motor such as a permanent magnetic synchronous motor (PMSM). A PMSM is a synchronous machine that uses permanent magnets (PM) to generate a magnetic field instead of electromagnetic windings. The three-phase machine operates using a three-phase current system. The fundamental frequency of the supplying three-phase system also decides the rotor speed by controlling the rotating magneto-motive force (MMF). Together with the field of the PM rotor, the MMF generates the torque.

The rotor consists of the PM and three static coils are the stator windings. The stator windings are distributed 120° apart from the PM in the center. The stator windings can be represented as an inductance in series with a resistance. The three windings are described as phase A, phase B, and phase C with the phase currents *iₐ, i_{b}* and *i_{c}.* When the current runs through the static coils a magnetic field is generated according to Faraday's law, and a magnetic field is generated by the PM. When the electrical angle between the MMF of the stator and the rotor field is 90°, the maximum torque is generated.

In conventional BEV systems, the three-phase current used for an AC motor such as PMSM is generated from a DC power supply by an inverter. In accordance with one or more embodiments of the disclosed techniques, the three-phase current is generated from the smartcell battery system 102 without the use of an inverter. To facilitate this end, the smartcell battery system 102 comprises a plurality of battery cells (not shown) arranged in three separate strings respectively corresponding to three different phases (e.g., Phase A string, Phase B string and Phase C string) that can provide the respective three phase currents of a three-phrase current used to drive the one or more motors 112.

In this regard, the smartcell battery system 102 includes a plurality of battery cell units 106 arranged in three separate strings respectively indicated as Phase A string, Phase B string, and Phase C string. The battery cell units 106 associated with the Phase A string include units A1-A*n*, the battery cell units associated with the Phase B string include units B1-B*n*, and the battery cell units associated with the Phase C string include units C1-C*n*. The number of battery cell units "*n*" associated with each string can vary. For example, in some implementations, the number of battery cell units *n* included in each string is 96, making a total of 288 battery cell units 106 in the smartcell battery system 102. However, the number of battery cell units 106 included in the smartcell battery system 102 is not limited to this configuration and can be tailored to suit various usage scenarios.

Each battery cell unit 106 A1-A*n*, B1-B*n*, and *C1-Cn,* can include one or more battery cells and a PCB device that includes several power electronic elements that enable them to intelligently control and manage operations of the respective battery cells to which they are connected. Further the PCBs enable the DC output from a from respective battery cells to which they are connected to be converted into an AC to control one or more electric motors 112 through field-oriented control FOC. These PCBs can be connected wirelessly to a master board 104 that handles high level control.

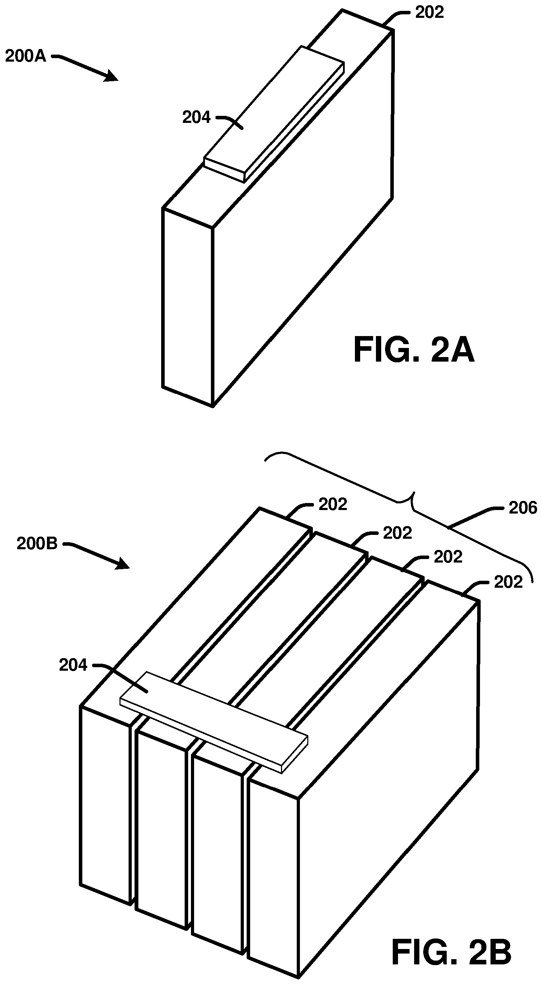

FIG. 2A and 2B illustrate example battery cell units of the smartcell battery system 102 in accordance with one or more embodiments described herein. FIG. 2A illustrates an example battery cell unit 200A comprising a single battery cell 202. FIG. 2B illustrates another example battery cell unit 200B comprising a plurality of battery cells 202. With reference to FIGs. 1, 2A and 2B, in various embodiments, all or some of the battery cell units 106 A1-A*n*, B1-B*n*, and *C1-Cn* shown in FIG. 1 can correspond to battery cell unit 200A and/or battery cell unit 200B. As shown in FIG. 2A in some embodiments, one or more of the battery cell units 106 can comprise a single battery cell 202. In other embodiments, one or more of the battery cell units 106 can comprise a cluster 206 of battery cells 202, wherein the cluster 206 can comprise two or more battery cells 202. The number of battery cells 202 included in a cluster 206 can vary. For example, although battery cell unit 200B is illustrated with four battery cells 202, it should be appreciated that the number of battery cells 202 can be tailored for different usage scenarios and power demands. The battery cells 202 can respectively comprise any type of battery cell material such as, for instance, a lithium battery cell material, a lithium ion (Li-Ion) battery cell material, a lithium metal battery cell material, a lithium sulphur (Li-S) battery cell material, a molten salt (Na-NiCl2) battery cell material, a nickel metal hydride (Ni-MH) battery cell material, a lead acid battery cell.

All or some of the battery cell units 106 A1-An, B1-Bn, and *C1-Cn* can include a PCB device 204 formed thereon and electrically connected to one or more the battery cells 202 respectively associated with the battery cell units 106. For example, the PCB device 204 can be physically attached to a single battery cell 202 or one or more of the respective battery cells 202 included a cluster 206. The manner in which the PCB device 204 is physically attached to a single battery cell 202 (e.g., as exemplified with respect to battery cell unit 200A) and/or a cluster 206 of battery cells (e.g., as exemplified with respect to battery cell unit 200B) can vary. For example, the PBC device 204 may be materially bonded to one or more battery cells 202, such as via one or more welded bonds (e.g., solder material welded bonds, laser material welded bonds, etc.) and/or via one or more adhesive material bonds). Alternatively, the PCB device 204 may be attached to one or more battery cells 202 via one or more screw connections.

The manner in which the PCB device 204 (or components thereof) is electrically connected to a single battery cell 202 and/or cluster 206 of battery cells 202 can also vary. For example, each of the battery cells 202 can comprise one or more terminals or power points (not shown) and the PCB device 204 (or components thereof) can be electrically connected to at least one terminal of the battery cells 202 via any suitable thermal connections (e.g., busbars, direct metal-to-metal component connections, wired connections, etc.). In some embodiments, each of the battery cells 202 can comprise four terminals or output points, wherein two of these may be AC terminals or power points and two may be isolated DC terminals or power points. In some embodiments as applied to a cluster 206 of battery cells 202, the PCB device 204 (or components thereof) may be electrically connected to at least one terminal of each battery cell of the cluster 206. In other embodiments as applied to a cluster 206 of battery cells 202, the PCB device 204 (or components thereof) may be electrically connected to at least one terminal of at least one battery cell 202 of the cluster 206.

The battery cell units 106 A1-A*n*, B1-B*n*, and *C1-Cn* (and/or components thereof) can be electrically connected to one another (e.g., via hardwire connections) in series and/or in parallel in a suitable number to reach a desired voltage and/or to form independent subgroups of the battery cell units 106 connected to different electrical systems (e.g., one or more of the LV electrical systems 108 and/or the HV electrical systems 110) of the electric vehicle 200. The battery cell units 106 (and/or components thereof), and or subgroups of the battery cell units 106, can further be connected electrically (e.g., via hardwire connections) to one or more motors 112, one or more of the LV electrical systems 108 and/or the HV electrical systems 110.

For example, in various embodiments, some or all of the battery cell units 106, A1-n, B1-n, and C1-n (or portions thereof as applied two electric motors in a 4-wheel drive machine) can be used to feed a DC electrical current to one or more LV electrical systems 108 and/or one or more HV electrical systems 110 as well as to feed AC electrical current to the one or more motors 112. To facilitate this end, the respective PCB devices (e.g., corresponding to PCB device 204 and the like) can include a DCDC converter that can be used to generate a desired DC output voltage for feeding the LV and/or HV electrical systems. The DCDC converters of the respective battery cell units 106 can be connected in series and/or in parallel (e.g., via wired connections). The respective PCB devices can also include H-bridge and each of the H-bridges can be connected in series (via wired connections). The battery cell units 106 can feed the respective AC phase currents from (each of the three phase strings A, B and C) to the one or more motors 112 via their respective battery cell clusters and H-bridge connections independent from their respective DCDC converters which feed the DC current to the corresponding LV electrical systems 110 or HV electrical systems 112 to which they are connected. Various configurations are envisioned.

In this regard, PCB device 204 can include or correspond to a circuit board device that comprises electronic or electrical hardware (and software) components that enable the PCB device 204 to intelligently control various operations of the respective battery cells 202 connected thereto, including supplying DC output and AC output to the corresponding electrical systems of the electric vehicle 100. The electronic or electrical hardware components can include, but are not limited to: a DCDC converter, a power module comprising a number of power switches used for the DCDC converter and the H-bridge (among other functions), busbars, wires, ports, sensors, control units (e.g., comprising a microprocessor, a central processing unit (CPU) coupled to memory device, or the like), a wireless communication component (e.g., a radio frequency (RF) transmitter/receiver, transceiver, or the like), and various others.

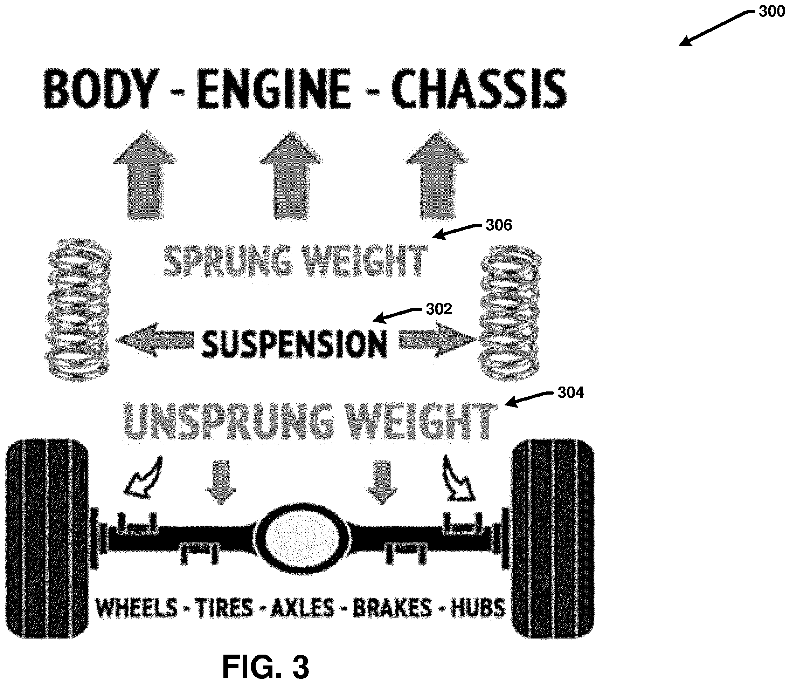

Turning now to FIG. 3, a schematic diagram 300 is depicted illustrating aspects of a suspension system of a vehicle that characterizes sprung weight and unsprung weight in accordance with certain embodiments of this disclosure.

In automotive engineering, the concepts of unsprung weight 304 and sprung weight 306 can play a crucial role in understanding and optimizing a vehicle's handling and performance. These terms refer to the distribution of mass in a vehicle's suspension system 302.

Unsprung weight 304 comprises the mass of components that are not supported by the suspension system 302. Such can include the wheels, tires, brakes, axels, hubs, and a portion of the suspension system 302 elements directly connected to them. In some EV designs, unsprung weight 304 can include in-wheel electric motors as well as associated inverter systems and any other related components. Unsprung weight 304 directly influences how the tires interact with the road surface. Reducing unsprung weight 304 can lead to improved handling characteristics, as it allows the suspension to react more quickly to changes in the road, leading to better traction and responsiveness.

On the other hand, sprung weight 306 typically refers to the mass supported by the vehicle's suspension system 302. Such can include the body, chassis, engine and transmission (for central motor and power train designs), and a significant portion of the suspension system 302 components. Changes in sprung weight 306 have a more indirect effect on handling. Increasing sprung weight 306 can impact a vehicle's overall stability and ride comfort.

The distribution of unsprung weight 304 and sprung weight 306 can play a crucial role in a vehicle's handling. A higher unsprung weight 304, typically resulting from heavier wheels or components, and can hinder a vehicle's ability to maintain contact with the road over uneven surfaces. Higher unsprung weight 304 can lead to reduced grip, increased tire deflection, and a less responsive suspension. Conversely, a lower unsprung weight 304 allows the suspension system 302 to react more quickly to changes in the road, enhancing grip and responsiveness.

The impact of unsprung weight 304 and sprung weight 306 on performance extends beyond handling. In terms of acceleration, reducing overall weight, including unsprung weight 304, can lead to improved power-to-weight ratios and faster acceleration. Additionally, optimizing weight distribution contributes to better braking performance, as lower unsprung weight 304 allows for more effective use of braking forces.

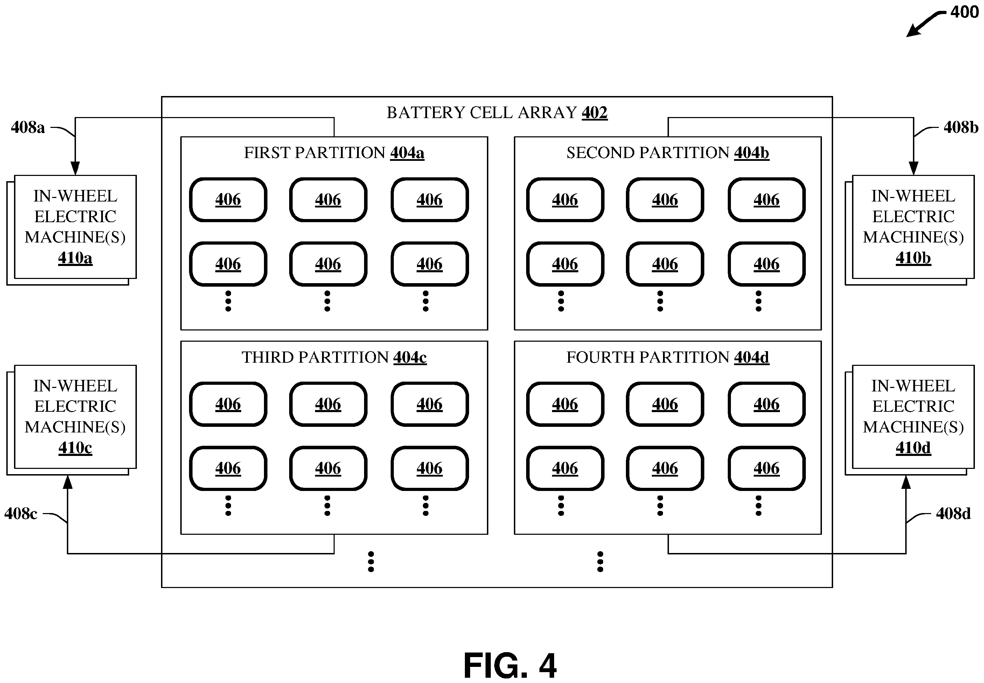

Hence, removing inverter system components from in-wheel electric machines can advantageously reduce unsprung weight 304 or otherwise redistribute mass from unsprung weight 304 portion of a vehicle (e.g., vehicle 100) to sprung weight 306 portions of the vehicle, which can have a significant impact on handling, performance, and other operational characteristics of the vehicle as well as significantly reduce design and production costs. As previously indicated, such can be accomplished by partitioning techniques with respect to the battery array (e.g., smartcell battery system 102) used to power multiple, independently controllable in-wheel electric machines, which is further detailed in connection with FIG. 4.

Turning now to FIG. 4, a schematic block diagram 400 is depicted illustrating aspects of a battery cell array that is partitioned into respective groups that can independently power respective in-wheel electric machines in accordance with certain embodiments of this disclosure.

As illustrated, an EV can comprise a battery cell array 402. In some embodiments, battery cell array 402 can be similar to or representative of smartcell battery system 102. Battery cell array 402 can comprise an array of battery cell devices 406, wherein the array can comprise any suitable number of battery cell devices 406. In some embodiments, a battery cell device 406 can be similar to or representative of battery cell unit 106 as detailed in connection with previous figures or otherwise herein.

Advantageously, all or a portion of battery cell devices 406 of battery cell array 402 can be divided into two or more partitions 404. In a representative example, and as illustrated here, battery cell array 402 is divided into four distinct partitions: first partition 404a, second partition 404b, third partition 404c and fourth partition 404d. However, it is appreciated that any suitable number of partitions 404 is contemplated. As a representative example, in-wheel electric machines 410 can be or can comprise motor 112 as detailed in connection with FIG. 1. In some embodiments, a one or more of the in-wheel electric machines 410 can be a three-phase PMSM machine, an induction machine, or another suitable machine. In some embodiments, one or more of the in-wheel electric machines 410 can be external rotor-controlled machines such as a doubly fed induction machine or another suitable machine.

A given partition 404 can be configured to provide alternating current output 408 to one or more associated in-wheel electric machines 410. As such, the associated in-wheel electric machine 410 does not require an in-wheel or in-hub inverter and associated inverter system components. Instead, independent power supply control of the various in-wheel electric machines 410 can be accomplished by the partitioning aspects, which can effectively transform a single battery cell array 402 into multiple smaller, independent battery cell arrays, each of which can have the same or similar operational characteristics as the larger battery cell array 402.

In that regard, first partition 404a can provide alternating current output 408a to one or more in-wheel electric machines 410a. Second partition 404b can provide alternating current output 408b to one or more in-wheel electric machines 410b. Third partition 404c can provide alternating current output 408c to one or more in-wheel electric machines 410c. Fourth partition 404d can provide alternating current output 408d to one or more in-wheel electric machines 410d and so on.

In some embodiments, a given partition 404 can draw power from any battery cell device 406 allocated to that particular partition 404, but generally not from battery cell devices 406 allocated to a different partition 404, as that different partition 404 will be configured to independently power a different set of in-wheel electric machines 410. Within a given partition 404, the number of battery cell devices 406 used to meet the associated demand can be adjusted on the fly by coupling or uncoupling battery cell devices 406 within the given partition 404. Concurrently, battery cell devices 406 allocated to other partitions 404 can be coupled or decoupled on the fly to meet the demands of other sets of in-wheel electric machines 410.

In some embodiments, the number of partitions 404 can match can match the number of in-wheel electric machines 410 or the number of wheels of a vehicle. In other embodiments, the number of partitions 404 can be more than one, but less than the number of in-wheel electric machines 410 or the number of wheels of the vehicle. For instance, a single partition 404 might be configured to power multiple in-wheel electric machines 410, but a given in-wheel electric machine 410 or wheel is typically powered by only one partition 404 in some embodiments. Likewise, a given battery cell device 406 is allocated to only one partition in some embodiments.

Accordingly, in some embodiments, the number of battery cell devices 406 in one partition 404 can vary from that of a different partition 404 based on the implementation. For example, in some embodiments, partitions 404 that power rear in-wheel electric machines 410 may be allocated a larger proportion of battery cell devices 406 included in battery cell array 402 than partitions 404 that power front in-wheel electric machines 410. As another example, in some embodiments, partitions 404 that power multiple (or many) in-wheel electric machines 410 may be allocated a larger proportion of battery cell devices 406 included in battery cell array 402 than partitions 404 that power only a single (or fewer) in-wheel electric machine 410. Hence, the number of battery cell devices 406 allocated per partition can be individually configured based on design, implementation, or other suitable factors.

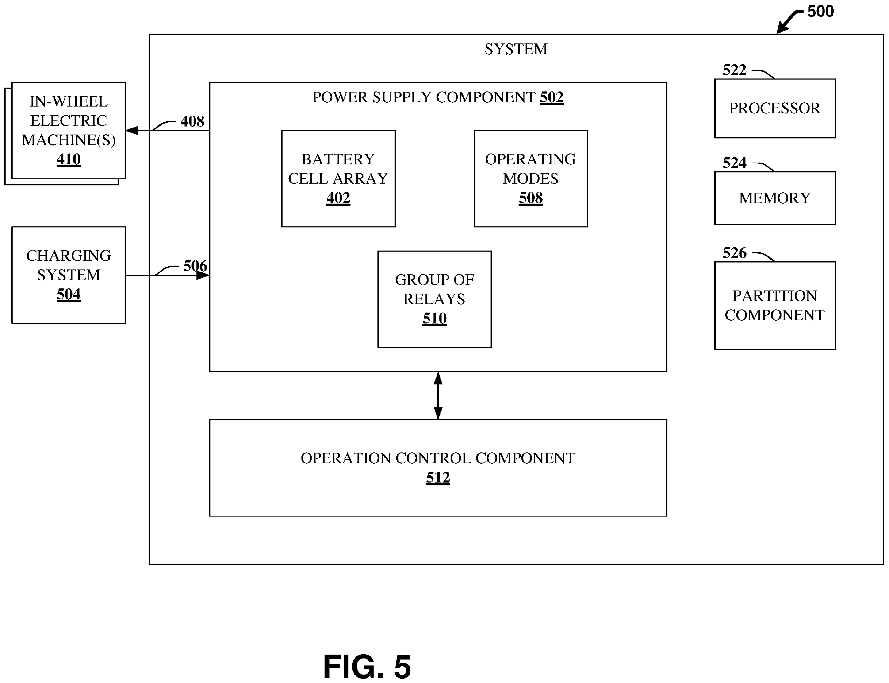

With reference now to FIG. 5, a schematic block diagram is depicted illustrating an example system 500 that can reduce unsprung weight in a vehicle with independently controlled in-wheel electric machines in accordance with certain embodiments of this disclosure. Utilizing in-wheel electric machines to individually power and control individual wheels of a vehicle typically increases unsprung weight 304 of a vehicle over traditional central drive train designs. However, unsprung weight 304 for in-wheel machine designs can be reduced as a result of removing or reducing associated inverter systems that typically accompany the in-wheel motors or machines. Even though the inverter systems can be removed, independent power and control can be maintained by battery partitioning techniques detailed herein.

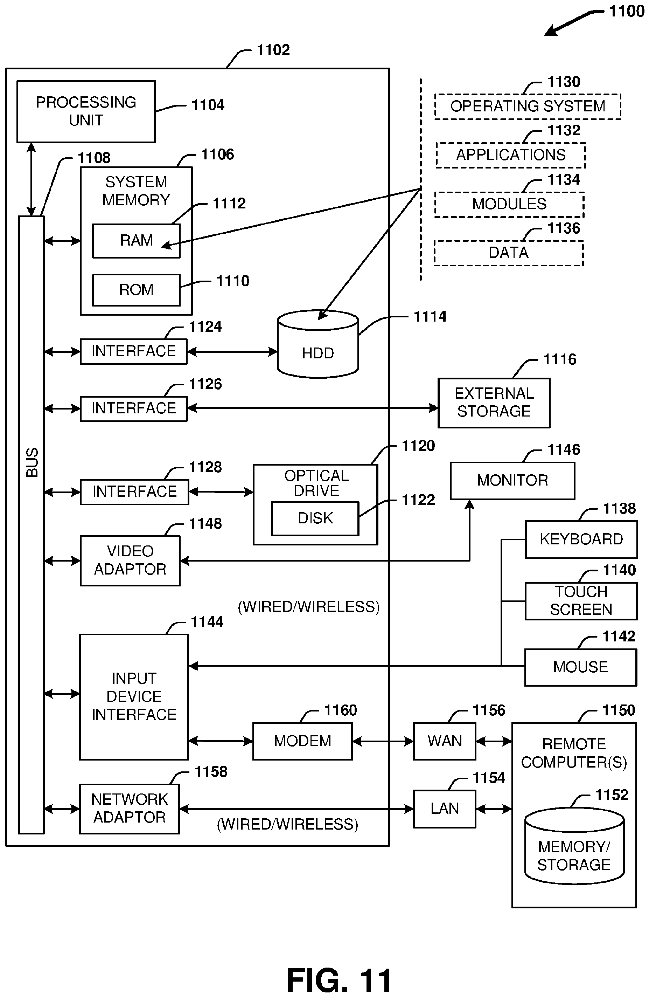

System 500 can comprise a processor 522 that, potentially along with partition component 526, can be specifically configured to perform functions associated with partitioning a battery array and/or facilitating independent or dedicated AC power outputs from the various partitions of the battery array. System 500 can also comprise memory 524 that stores executable instructions that, when executed by processor 522, can facilitate performance of operations. Processor 522 can be a hardware processor having structural elements known to exist in connection with processing units or circuits, with various operations of processor 522 being represented by functional elements shown in the drawings herein that can require special-purpose instructions, for example, stored in memory 524 and/or partition component 526. Along with these special-purpose instructions, processor 522 and/or partition component 526 can be a special-purpose device. Further examples of the memory 524 and processor 522 can be found with reference to FIG. 11. It is to be appreciated that system 500 or computer 1102 can be used in connection with implementing one or more of the systems, devices, or components shown and described in connection with FIG. 5 and other figures disclosed herein.

System 500 can further comprise power supply component 502 and operation control component 512. Power supply component 502 can be operatively coupled to multiple in-wheel electric machines 410 and charging system 504. Thus, power supply component 502 can deliver respective AC power outputs 408 to respective in-wheel electric machines 410, and can receive power input 506 from charging system 504 as further detailed herein.

Power supply component 502 can comprise battery cell array 402 that is arranged into multiple partitions 404 as detailed in connection with FIG. 4. As explained, each of the multiple partitions 404 can provide AC power output 408 to a different set of in-wheel electric machines 410. For example, a first partition 404a can be configured to power one or more first in-wheel electric machines 410a of a vehicle and a second partition 404b can be configured to power one or more second in-wheel electric machines 410b.

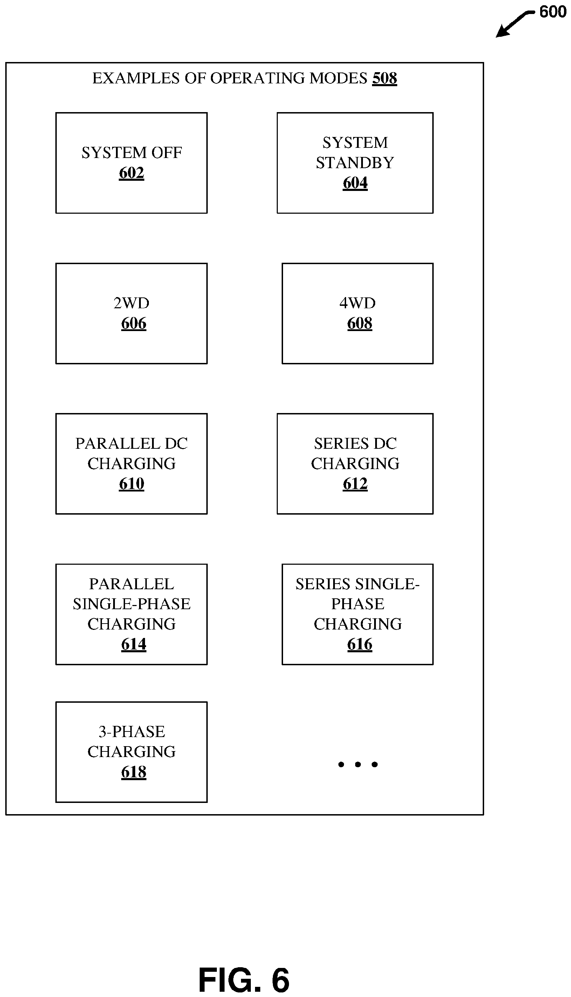

Operation control component 512 can be configured to initiate one or more of a group of different operating modes 508. The different operating modes 508 can relate to operating modes of the power supply component 502. In some embodiments, these operating modes can relate to either one of operating in-wheel electric machines 410 or charging one or more elements of battery cell array 402, examples of which are further detailed with reference to FIG. 6.

While still referring to FIG. 5, but turning now as well to FIG. 6, a schematic block diagram 600 is depicted illustrating various examples of operating modes 508 in accordance with certain embodiments of this disclosure. As non-limiting examples, operating modes 508 can comprise system off mode 602, in which related circuitry is powered down or off, and system standby mode 604, in which the related circuitry has some elements powered and ready for further commands.

In the context of operating a vehicle during use, operating modes 508 can relate to 2 wheel drive (WD) mode 606, 4WD mode 608, and so on. For the sake of convenience, examples used herein are intended to relate to four-wheeled vehicles having two front wheels and two rear wheels. However, it is appreciated that the disclosed techniques can apply to other arrangements such as vehicles with two, three, four, or more wheels.

Thus, as used herein, 2WD mode 606 is named in the context of a traditional two-wheeled vehicle in which only two (e.g., front or rear) wheels are powered. However, 2WD mode 606 is intended include other arrangements in which some set of wheels that is fewer or more than two is actively powered, such as a single rear wheel for a motor cycle or other vehicle or more than two rear wheels for a truck or other vehicle.

Likewise, 4WD mode 608 can refer to more or fewer than four wheels, typically indicating that wheels from both the front and the rear are actively powered. As used herein 4WD mode 608 can be the same or similar to all-wheel drive (AWD).

In the context of charging a vehicle, operating modes 508 can relate to any one of DC charging modes or AC charging modes. For example, parallel DC charging mode 610 can allow battery cell array 402 to be charged via DC current provided in parallel, while series DC charging mode 612 can allow battery cell array 402 to be charged via DC current provided in series.

Appreciably, separate operating modes 508 can be allocated for AC charging. For instance, parallel single-phase charging mode 614 can allow battery cell array 402 to be charged via AC current according to a parallel arrangement, while series single-phase charging mode 616 can allow battery cell array 402 to be charged via AC current according to a series arrangement. 3-phase charging mode 618 can allow battery cell array 402 to be charged via AC current using multiple conductors. As is understood, single-phase charging typically uses only a single conductor, whereas 3-phase charging utilizes three distinct conductors for faster power transfer. As used herein, 3-phase charging is intended to mean charging with two or more conductors.

Still referring to FIG. 5, it is appreciated that operation control component 512 can initiate the one or more operating modes 508 based on a state of a group of relays 510 that are electrically coupled to power supply component 502.

In some embodiments, all or a portion of system 500 can be situated in a sprung weight 306 portion of the associated vehicle. Hence, independently generated and dedicated machine-specific AC power output 408 can be transmitted from a sprung weight 306 portion of the vehicle to an associated in-wheel electric machine 410 situated in an unsprung weight 304 portion of the vehicle, thereby removing or reducing inverter mechanisms and related components from the unsprung weight 304 portions of the vehicle.

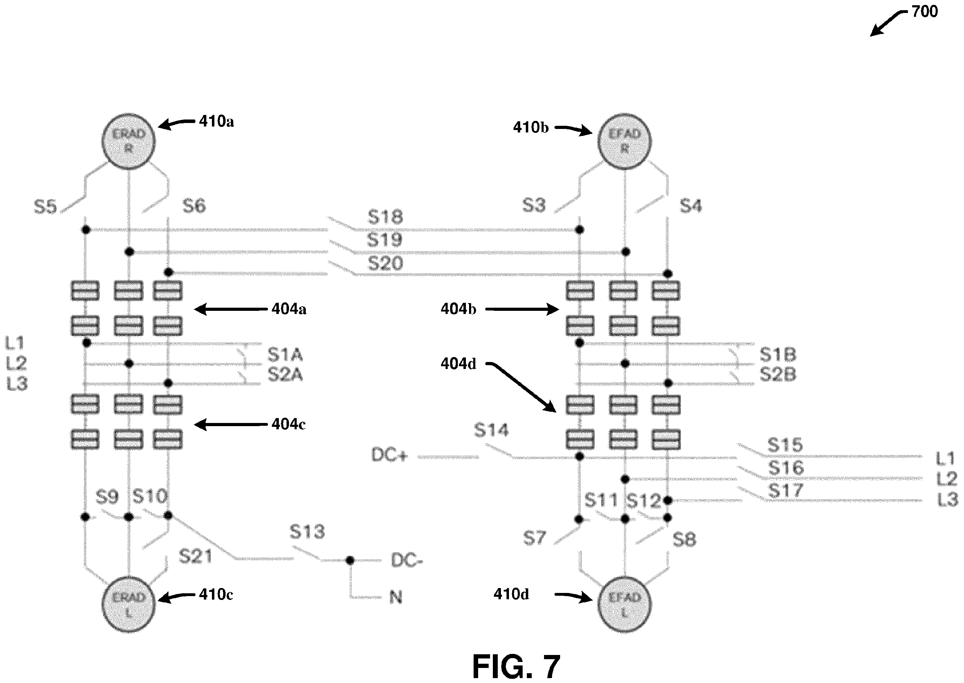

Referring now to FIG. 7, a schematic wiring diagram 700 is depicted illustrating example wiring for a first embodiment in which a given battery partition is allocated or dedicated to a single in-wheel electric machine in accordance with certain embodiments of this disclosure. In some embodiments, a given battery partition can power additional in-wheel electric machines.

As illustrated, battery cell devices of the first partition 404a are dedicated to powering in-wheel electric machine 410a, which in this example is coupled to an electric rear axle drive (ERAD) on the right (R) side of the vehicle to power the rear-right wheel of the vehicle. Battery cell devices of the second partition 404b are dedicated to powering in-wheel electric machine 410b, which in this example is coupled to an electric front axle drive (EFAD) on the right side of the vehicle to power the front-right wheel of the vehicle. Battery cell devices of the third partition 404c are dedicated to powering in-wheel electric machine 410c, which in this example is coupled to an ERAD on the left (L) side of the vehicle to power the rear-left wheel of the vehicle. Battery cell devices of the fourth partition 404d are dedicated to powering in-wheel electric machine 410d, which in this example is coupled to an EFAD on the left side of the vehicle to power the front-left wheel of the vehicle. In this embodiment, in-wheel electric machines 410 can be any type of a PMSM machine, an induction machine, or similar.

As noted, all or a portion of the battery cells (e.g., battery cell devices 406) of battery cell array 402 can be divided into a given partition 404 and therefore can provide dedicated power to a given in-wheel electric machine 410 by power supply component 502, e.g., as described in connection with FIG. 5. The operating mode 508 of power supply component 502 can be determined by a state of group of relays 510, which can be controlled by operation control component 512.

Group of relays 510 can be indicative of one or more relays, switches, or other suitable element that is configured to control a flow of electrons through a circuit by opening or closing, either mechanically, electro-mechanically, or otherwise. For example, in wiring diagram 700, group of relays 510 can be indicative of elements labeled S1-S21. Elements labeled L1-L3 can be indicative of respective live alternating power sources. Elements labeled DC+ and DC- can be indicative of direct current sources of positive and negative polarities, respectively. Elements labeled N can be neutral or ground.

Hence, based on the state of the various switch elements S1-S21 (e.g., group of relays 510), operation control component 512 can select among the different operating modes 508. For example, Table I below provides an example of operating mode 508 control. In this example, a "1" indicates that the associated relay or switch is closed and thus allows the flow of electrons there through.

**Table I.**

| | S1A, S1B | S2A, S2B | S 3 | S 4 | S 5 | S 6 | S 7 | S 8 | S 9 | S 1 0 | S 1 1 | S 1 2 | S 1 3 | S 1 4 | S 1 5 | S 1 6 | S 1 7 | S 1 8 | S 1 9 | S 2 0 | S 2 1 |
|---|---|---|---|---|---|---|---|---|---|---|---|---|---|---|---|---|---|---|---|---|---|
| System off | | | | | | | | | | | | | | | | | | | | | |
| System Standby | 1 | 1 | | | | | | | | | | | | | | | | | | | |
| Driving 2WD | 1 | 1 | | | 1 | 1 | | | | | | | | | | | | | | | 1 |
| Driving 4WD | 1 | 1 | 1 | 1 | 1 | 1 | 1 | 1 | | | | | | | | | | | | | 1 |
| DC Charge (P) | | | | | | | | | 1 | 1 | 1 | 1 | 1 | 1 | | | | 1 | 1 | 1 | |
| DC Charge (S) | | | | | | | | | 1 | | | 1 | 1 | 1 | | | | 1 | 1 | 1 | |
| 1-Phase Charge (P) | | | | | | | | | 1 | 1 | 1 | 1 | 1 | | 1 | | | 1 | 1 | 1 | |
| 1-Phase Charge (S) | | | | | | | | | 1 | | | 1 | 1 | | 1 | | | 1 | 1 | 1 | |
| 3-Phase Charge | | | | | | | | | 1 | 1 | | | | | 1 | 1 | 1 | 1 | 1 | 1 | |

Hence, in this example, operation control component 512 can set the state of all relays of group of relays 510 to open to effectuate system off mode 602. For system standby mode 604 relays S1A, S1B, S2A, and S2B can be closed, while all other relays are open, and so on according to Table I. It is noted that 2WD mode 606 and 4WD mode 608 can be substantially similar in that 2WD mode 606 has the same state as 4WD mode 608 with the exception that S3, S4, S7, and S8 are open, meaning power is not delivered to the in-wheel electric machines 410b and 410d that control left and right front wheels, illustrated simplified logic control of the disclosed subject matter. Similarly, any type of DC or AC charging, including three-phase charging can be effectuated by changing the state of relays S9-S21 accordingly.

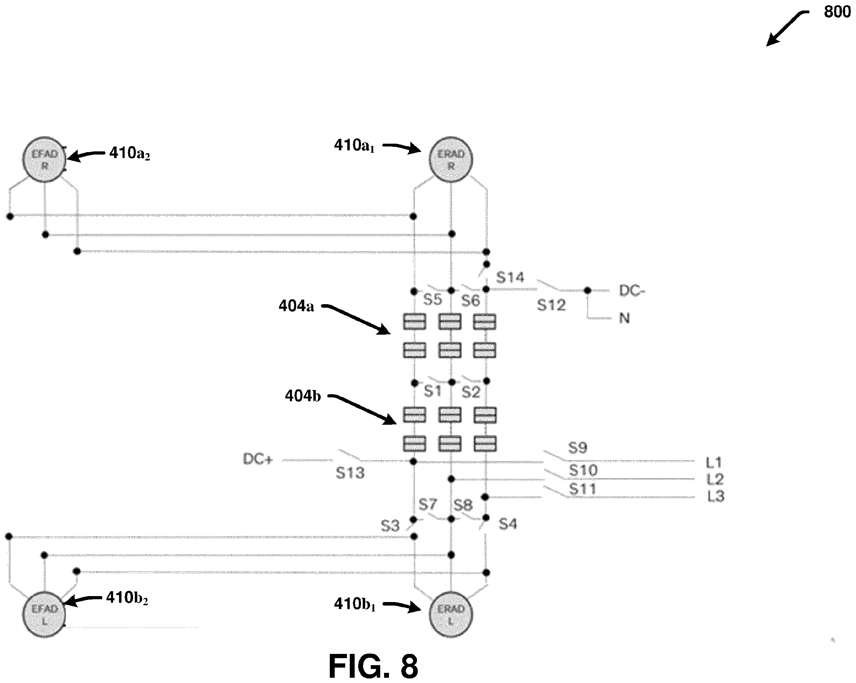

Turning now to FIG. 8, a schematic wiring diagram 800 is depicted illustrating example wiring for a second embodiment in which a given battery partition is allocated or dedicated to a multiple in-wheel electric machine in accordance with certain embodiments of this disclosure. In this example, battery cell devices of battery cell array are divided into only two partitions 404, even though there are four in-wheel electric machines 410 that collectively power four different wheels of the vehicle. Hence, each partition 404 is dedicated to powering multiple in-wheel electric machines 410. It is appreciated that a given battery partition can power any number of in-wheel electric machines 410 depending on the implementation.

As illustrated, battery cell devices of the first partition 404a are dedicated to powering in-wheel electric machines 410a₁ and 410a₂, but it is appreciated that more than two machines could be powered in a like manner in other embodiments. Likewise, battery cell devices of the second partition 404b are dedicated to powering in-wheel electric machines 410b₁ and 410b₂. In this example, both in-wheel electric machines 410a₁ and 410a₂ apply to right-side wheels and both in-wheel electric machines 410b₁ and 410b₂ apply to left-side wheels.

In this embodiment, in-wheel electric machines that control the front wheels (e.g., EFAD) can be external rotor-controlled machines or doubly fed induction machines. In some embodiments, micro-inverter elements or components can be installed at the EFADs to provide improved independent power, torque, or other control or to help manage between 2WD mode 606 and 4WD mode 608. In-wheel electric machines that control rear wheels (e.g., ERAD) can be any suitable type of PMSM, induction machine, or the like. Table II below provides an example of operating mode 508 control. In this example, a "1" indicates that the associated relay or switch is closed and thus allows the flow of electrons there through.

**Table II.**

| | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| System off | | | | | | | | | | | | | | |
| System Standby | 1 | 1 | | | | | | | | | | | | |
| Driving 2WD | 1 | 1 | 1 | 1 | | | | | | | | | | 1 |
| Driving 4WD | 1 | 1 | 1 | 1 | | | | | | | | | | 1 |
| DC Charge (P) | | | | | 1 | 1 | 1 | 1 | | | | 1 | 1 | |
| DC Charge (S) | | | | | 1 | | | 1 | | | | 1 | 1 | |
| 1-Phase Charge (P) | | | | | 1 | 1 | 1 | 1 | 1 | | | 1 | | |
| 1-Phase Charge (S) | | | | | 1 | | | 1 | 1 | | | 1 | | |
| 3-Phase Charge | | | | | 1 | 1 | | | 1 | 1 | 1 | | | |

In this example, group of relays 510 are significantly reduced resulting in relay elements labeled as S1-S14. As shown in connection with FIGS. 7 and 8, by controlling the sequence of relays of group of relays 510, operation control component 512 can switch between operating modes 508, which can include can include standby, driving in 2WD, driving in 4WD or AWD, DC charging and single-phase AC a charging, where smartcells in three phases (A-B-C) can be connected in parallel, DC charging and single-phase AC charging where smartcells in three phases (A-B-C) can be connected in series, as well as three-phase AC charging can be selected.

Battery cell devices 406 (e.g., smartcells) of battery cell array 402 can be centrally located in a sprung weight 306 portion of the vehicle. These smartcells can deliver AC power output to in-wheel electric machines 410, typically situated in an unsprung weight 304 portion of the vehicle. Because AC power is directly provided by the smartcells in-wheel electric machines 410 do not need to comprise certain inverter system components, thereby reducing unsprung weight 304. Because battery cell array 402 is divided into different partitions 410, each partition 410 can deliver independently controllable AC power to the associated dedicated in-wheel electric machine(s) 410. It is appreciated that the various in-wheel electric machines 410 can be of the same type or of different types depending on implementation.

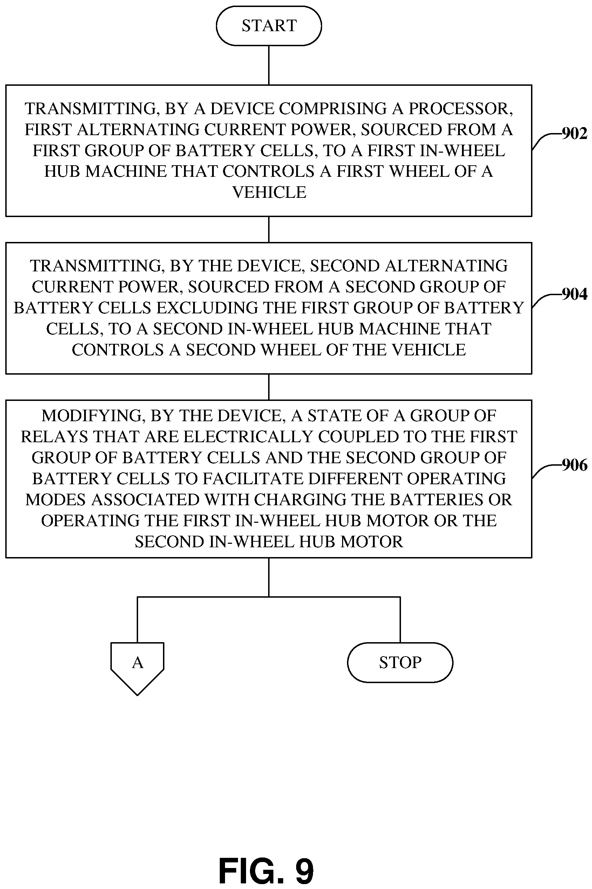

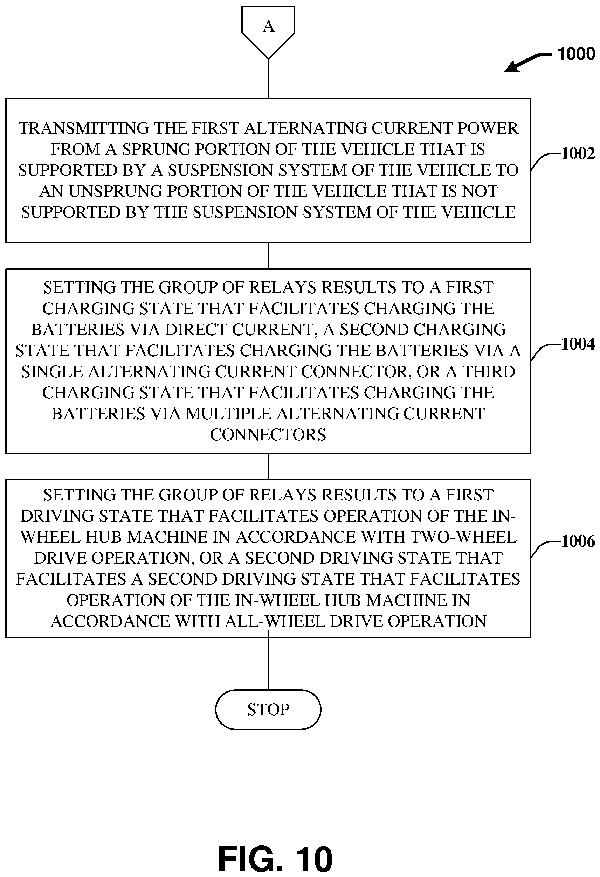

FIGS. 9 and 10 illustrate various methods in accordance with the disclosed subject matter. While, for purposes of simplicity of explanation, the methods are shown and described as a series of acts, it is to be understood and appreciated that the disclosed subject matter is not limited by the order of acts, as some acts may occur in different orders and/or concurrently with other acts from that shown and described herein. For example, those skilled in the art will understand and appreciate that a method could alternatively be represented as a series of interrelated states or events, such as in a state diagram. Moreover, not all illustrated acts may be required to implement a method in accordance with the disclosed subject matter. Additionally, it should be further appreciated that the methods disclosed hereinafter and throughout this specification are capable of being stored on an article of manufacture to facilitate transporting and transferring such methods to computers.

Turning now to FIG. 9, exemplary method 900 is depicted. Method 900 can facilitate independent or dedicated AC power outputs based on partitioning techniques of a battery array in accordance with certain embodiments of this disclosure. While method 900 describes a complete method, in some embodiments, method 900 can include one or more elements of method 1000, as illustrated by insert A.

At reference numeral 902, a device comprising a processor can transmit first alternating current power to a first in-wheel hub motor (or machine) that controls a first wheel of a vehicle. The first alternating current power can be sourced from a first group of battery cells. For example, battery cells of a battery array can be partitioned into distinct groups, and each group (e.g., partition) of battery cells can be dedicated to independently powering a specific in-wheel hub motor.

At reference numeral 904, the device can transmit second alternating current power to a second in-wheel hub motor that controls a second wheel of a vehicle. The second alternating current power can be sourced from a second group of battery cells that excludes battery cells of the first group of battery cells. Hence, battery cells of the first group can power the first in-wheel hub motor but not the second in-wheel hub motor. Likewise, battery cells of the second group can power the second in-wheel hub motor but not the first in-wheel hub motor.

At reference numeral 906, the device can modify a state of a group of relays that are electrically coupled to the first group of battery cells and the second group of battery cells to facilitate different operating modes associated with charging the batteries or operating the first in-wheel hub motor or the second in-wheel hub motor in an independent manner. Thus, independent power, torque, traction, or other control can be provided by independent groups (e.g., partitions) of the battery cell array. Method 900 can terminate in some embodiments, or proceed to insert A in other embodiments, which is further detailed in connection with FIG. 10.

With reference now to FIG. 10, exemplary method 1000 is depicted. Method 900 can provide additional aspects or elements associated with facilitating independent or dedicated AC power outputs based on partitioning techniques of a battery array in accordance with certain embodiments of this disclosure.

For example, in the context of transmitting the first or second AC power (e.g., as detailed in connection with reference numerals 902 or 904 of FIG. 9), at reference numeral 1002, the device can transmit AC power from a sprung weight portion of the vehicle that is supported by a suspension system of the vehicle to an unsprung weight portion of the vehicle that is not supported by the suspension system of the vehicle. Since smartcells, with associated PCBs, can provide AC power output and can be situated in a sprung weight portion of the vehicle, inverters and related components (e.g., cooling systems or the like) can be removed from associated in-wheel hub motors.

In the context of modifying the state of the group of relays detailed in connection with reference numeral 906 of FIG. 9, the state of the group of relies can be modified to facilitate battery charging operations detailed in connection with reference numeral 1004 or driving operations detailed in connection with reference numeral 1006.

At reference numeral 1004, the device can modify the state of the group of relays resulting in a first charging state that facilitates charging the batteries via direct current, a second charging state that facilitates charging the batteries via a single alternating current connector, or a third charging state that facilitates charging the batteries via multiple alternating current connectors. Such can be in accord with three-phases (A-B-C) and can be parallel or series depending on the implementation or model selection.

At reference numeral 1006, the device can modify the state of the group of relays resulting in a first driving state that facilitates operation of the in-wheel hub motor in accordance with two-wheel drive operation; or a second driving state that facilitates a second driving state that facilitates operation of the in-wheel hub motor in accordance with all-wheel drive operation.

In order to provide additional context for various embodiments described herein, FIG. 11 and the following discussion are intended to provide a brief, general description of a suitable computing environment 1100 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11, the example environment 1100 for implementing various example embodiments described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a high-speed RAM such as static RAM for caching data.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and an optical disk drive 1120 (e.g., which can read or write from a CD-ROM disc, a DVD, a BD, etc.). While the internal HDD 1114 is illustrated as located within the computer 1102, the internal HDD 1114 can also be configured for external use in a suitable chassis (not shown). Additionally, while not shown in environment 1100, a solid state drive (SSD) could be used in addition to, or in place of, an HDD 1114. The HDD 1114, external storage device(s) 1116 and optical disk drive 1120 can be connected to the system bus 1108 by an HDD interface 1124, an external storage interface 1126 and an optical drive interface 1128, respectively. The interface 1124 for external drive implementations can include at least one or both of Universal Serial Bus (USB) and Institute of Electrical and Electronics Engineers (IEEE) 1194 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the .NET framework, for applications 1132. Runtime environments are consistent execution environments that allow applications 1132 to run on any operating system that includes the runtime environment. Similarly, operating system 1130 can support containers, and applications 1132 can be in the form of containers, which are lightweight, standalone, executable packages of software that include, e.g., code, runtime, system tools, system libraries and settings for an application.

Further, computer 1102 can be enabled with a security module, such as a trusted processing module (TPM). For instance, with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen 1140, and a pointing device, such as a mouse 1142. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 1194 serial port, a game port, a USB port, an IR interface, a BLUETOOTH^{®} interface, etc.

A monitor 1146 or other type of display device can be also connected to the system bus 1108 via an interface, such as a video adapter 1148. In addition to the monitor 1146, a computer typically includes other peripheral output devices (not shown), such as speakers, printers, etc.

The computer 1102 can operate in a networked environment using logical connections via wired and/or wireless communications to one or more remote computers, such as a remote computer(s) 1150. The remote computer(s) 1150 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1152 is illustrated. The logical connections depicted include wired/wireless connectivity to a local area network (LAN) 1154 and/or larger networks, e.g., a wide area network (WAN) 1156. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1154 through a wired and/or wireless communication network interface or adapter 1158. The adapter 1158 can facilitate wired or wireless communication to the LAN 1154, which can also include a wireless access point (AP) disposed thereon for communicating with the adapter 1158 in a wireless mode.

When used in a WAN networking environment, the computer 1102 can include a modem 1160 or can be connected to a communications server on the WAN 1156 via other means for establishing communications over the WAN 1156, such as by way of the Internet. The modem 1160, which can be internal or external and a wired or wireless device, can be connected to the system bus 1108 via the input device interface 1144. In a networked environment, program modules depicted relative to the computer 1102 or portions thereof, can be stored in the remote memory/storage device 1152. It will be appreciated that the network connections shown are example and other means of establishing a communications link between the computers can be used.

When used in either a LAN or WAN networking environment, the computer 1102 can access cloud storage systems or other network-based storage systems in addition to, or in place of, external storage devices 1116 as described above. Generally, a connection between the computer 1102 and a cloud storage system can be established over a LAN 1154 or WAN 1156 e.g., by the adapter 1158 or modem 1160, respectively. Upon connecting the computer 1102 to an associated cloud storage system, the external storage interface 1126 can, with the aid of the adapter 1158 and/or modem 1160, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE 802.11 (a, b, g, n, *etc.*) to provide secure, reliable, fast wireless connectivity. A Wi-Fi network can be used to connect computers to each other, to the Internet, and to wired networks (which use IEEE802.3 or Ethernet). Wi-Fi networks operate in the unlicensed 5 GHz radio band at a 54 Mbps (802.11a) data rate, and/or a 2.4 GHz radio band at an 11 Mbps (802.11b), a 54 Mbps (802.11g) data rate, or up to a 600 Mbps (802.11n) data rate for example, or with products that contain both bands (dual band), so the networks can provide real-world performance similar to the basic "10BaseT" wired Ethernet networks used in many offices.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory in a single machine or multiple machines. Additionally, a processor can refer to an integrated circuit, a state machine, an application specific integrated circuit (ASIC), a digital signal processor (DSP), a programmable gate array (PGA) including a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units. One or more processors can be utilized in supporting a virtualized computing environment. The virtualized computing environment may support one or more virtual machines representing computers, servers, or other computing devices. In such virtualized virtual machines, components such as processors and storage devices may be virtualized or logically represented. In an example embodiment, when a processor executes instructions to perform "operations", this could include the processor performing the operations directly and/or facilitating, directing, or cooperating with another device or component to perform the operations.

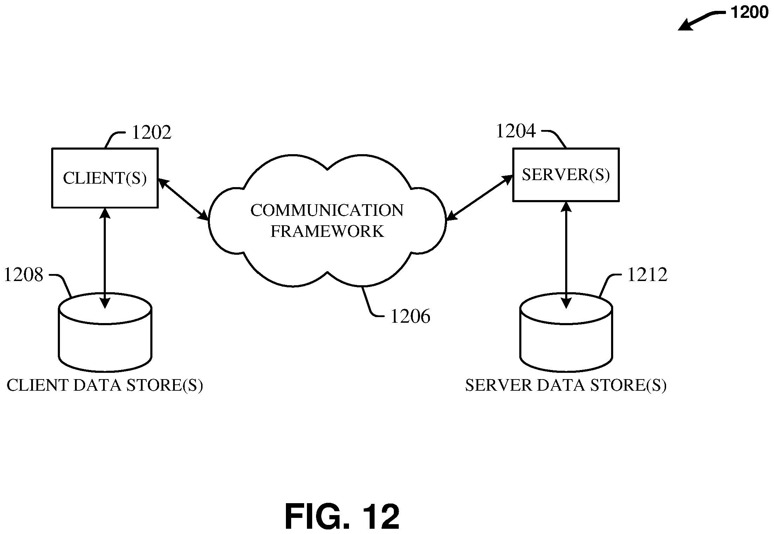

Referring now to FIG. 12, there is illustrated a schematic block diagram of a computing environment 1200 in accordance with this specification. The system 1200 includes one or more client(s) 1202, (e.g., computers, smart phones, tablets, cameras, PDA's). The client(s) 1202 can be hardware and/or software (e.g., threads, processes, computing devices). The client(s) 1202 can house cookie(s) and/or associated contextual information by employing the specification, for example.

The system 1200 also includes one or more server(s) 1204. The server(s) 1204 can also be hardware or hardware in combination with software (e.g., threads, processes, computing devices). The servers 1204 can house threads to perform transformations of media items by employing aspects of this disclosure, for example. One possible communication between a client 1202 and a server 1204 can be in the form of a data packet adapted to be transmitted between two or more computer processes wherein data packets may include coded analyzed headspaces and/or input. The data packet can include a cookie and/or associated contextual information, for example. The system 1200 includes a communication framework 1206 (e.g., a global communication network such as the Internet) that can be employed to facilitate communications between the client(s) 1202 and the server(s) 1204.

Communications can be facilitated via a wired (including optical fiber) and/or wireless technology. The client(s) 1202 are operatively connected to one or more client data store(s) 1208 that can be employed to store information local to the client(s) 1202 (e.g., cookie(s) and/or associated contextual information). Similarly, the server(s) 1204 are operatively connected to one or more server data store(s) 1210 that can be employed to store information local to the servers 1204. Further, the client(s) 1202 can be operatively connected to one or more server data store(s) 1210.

In one exemplary implementation, a client 1202 can transfer an encoded file, (e.g., encoded media item), to server 1204. Server 1204 can store the file, decode the file, or transmit the file to another client 1202. It is noted that a client 1202 can also transfer uncompressed file to a server 1204 and server 1204 can compress the file and/or transform the file in accordance with this disclosure. Likewise, server 1204 can encode information and transmit the information via communication framework 1206 to one or more clients 1202.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating there from. Therefore, the disclosed subject matter should not be limited to any single embodiment described herein, but rather should be construed in breadth and scope in accordance with the appended claims below.

Further aspects of the invention are provided by the subject matter of the following clauses:
C1. A system, comprising:
   a memory that stores computer executable components; and
   a processor that executes the computer executable components stored in the memory, wherein the computer executable components comprise:
      a power supply component that powers respective in-wheel electric machines of a vehicle, the power supply component comprising an array of battery cells that are partitioned into groups comprising a first group of cells configured to power a first in-wheel electric machine of the vehicle and a second group of cells configured to power a second in-wheel electric machine of the vehicle; and
      an operation control component that initiates one of a group of different operating modes relating to the power supply component based on a state of a group of relays that are electrically coupled to the power supply component.
C2. The system of any preceding clause, wherein the power supply component independently powers the respective in-wheel electric machines and the array of battery cells is partitioned into a number of groups corresponding to a number of in-wheel electric machines of the vehicle, wherein a given group of cells is configured to exclusively power an associated in-wheel electric machine.
C3. The system of any preceding clause, wherein the first group of cells power the first in-wheel electric machine and a third in-wheel electric machine of the vehicle that differs from the second in-wheel machine that is powered by the second group of cells.
C4. The system of any preceding clause, wherein the first group of cells and the second group of cells comprise respective onboard power transforming devices that transforms current delivered to the respective in-wheel electric machines to alternative current.
C5. The system of any preceding clause, wherein the power supply component is situated in a sprung weight portion of the vehicle resulting in a weight of the power supply component being supported by a suspension system of the vehicle.
C6. The system of any preceding clause, wherein the respective in-wheel electric machines are situated in an unsprung weight portion of the vehicle resulting in a weight of the respective in-wheel electric machines not being supported by a suspension system of the vehicle.
C7. The system of any preceding clause, wherein the group of different operating modes comprises a direct current charging mode in which at least a portion of battery devices associated with the power supply component is charged via a direct current connection.
C8. The system of any preceding clause, wherein the group of different operating modes comprises a single phase charging mode in which at least a portion of the battery devices associated with the power supply component is charged via a single alternating current connection.
C9. The system of any preceding clause, wherein the group of different operating modes comprises a multi-phase charging mode in which at least a portion of the battery devices associated with the power supply component is charged via multiple alternating current connections.
C10. The system of any preceding clause, wherein the group of different operating modes comprises a two-wheel drive mode in which the power supply component provides the alternating current output to two of the multiple different in-wheel electric machines.
C11. The system of any preceding clause, wherein the group of different operating modes comprises an all-wheel drive mode in which the power supply component provides the alternating current output to more than two of the multiple different in-wheel electric machines.
C12. The system of clause C1 above with any set of combinations of the systems of clauses C2-C11 above.
C13. A non-transitory machine-readable medium, comprising executable instructions that, when executed by a processor, facilitate performance of operations, comprising:
   delivering first alternating current power, sourced from a first portion of a battery array, to a first in-wheel hub motor of a vehicle;
   delivering second alternating current power, sourced from a second portion of the battery array that excludes the first portion, to a second in-wheel hub motor of the vehicle; and
   changing a state of a group of relays that are electrically coupled to the battery array to facilitate different operating modes associated with charging the batteries or operating the first in-wheel hub motor or the second in-wheel hub motor.
C14. The non-transitory machine-readable medium of any preceding clause, wherein the first in-wheel hub motor and the second in-wheel hub motor are situated in an unsprung portion of the vehicle resulting in a weight of the first in-wheel hub motor and the second in-wheel hub motor not being supported by a suspension system of the vehicle.
C15. The non-transitory machine-readable medium of any preceding clause, wherein the battery array and a power transforming system that transforms direct current output from the battery array to the first alternating current and the second alternating current provided to the first in-wheel hub motor and the second in-wheel hub motor are situated in a sprung portion of the vehicle, resulting in a weight of the battery array and the power transforming system being supported by a suspension system of the vehicle.
C16. The non-transitory machine-readable medium of any preceding clause, wherein the operations comprise changing the state of the group of relays to a first charging state that facilitates charging the batteries via direct current, a second charging state that facilitates charging the batteries via a single alternating current connector, or a third charging state that facilitates charging the batteries via multiple alternating current connectors.
C17. The non-transitory machine-readable medium of any preceding clause, wherein the operations comprise changing the state of the group of relays to a first driving state that facilitates operation of the in-wheel hub motor in accordance with two-wheel drive operation, or a second driving state that facilitates a second driving state that facilitates operation of the in-wheel hub motor in accordance with all-wheel drive operation.
C18. The non-transitory machine-readable medium of clause C13 above with any set of combinations of the non-transitory machine-readable mediums of clauses C14-C17 above
C19. A method, comprising:
   transmitting, by a device comprising a processor, first alternating current power, sourced from a first group of battery cells, to a first in-wheel hub motor that controls a first wheel of a vehicle;
   transmitting, by the device, second alternating current power, sourced from a second group of battery cells excluding the first group of battery cells, to a second in-wheel hub motor that controls a second wheel of the vehicle; and
   modifying, by the device, a state of a group of relays that are electrically coupled to the first group of battery cells and the second group of battery cells to facilitate different operating modes associated with charging the batteries or operating the first in-wheel hub motor or the second in-wheel hub motor.
C20. The method of any preceding clause, wherein the transmitting the first alternating current power comprises transmitting the first alternating current power from a sprung weight portion of the vehicle that is supported by a suspension system of the vehicle to an unsprung weight portion of the vehicle that is not supported by the suspension system of the vehicle.
C21. The method of any preceding clause, wherein the modifying the state of the group of relays results in a first charging state that facilitates charging the batteries via direct current, a second charging state that facilitates charging the batteries via a single alternating current connector, or a third charging state that facilitates charging the batteries via multiple alternating current connectors.
C22. The method of any preceding clause, wherein the modifying the state of the group of relays results in a first driving state that facilitates operation of the in-wheel hub motor in accordance with two-wheel drive operation, or a second driving state that facilitates a second driving state that facilitates operation of the in-wheel hub motor in accordance with all-wheel drive operation.
C23. The method of clause C17 above with any set of combinations of the methods of clauses C18-C22 above.

## Claims

1. A system, comprising:
a memory that stores computer executable components; and
a processor that executes the computer executable components stored in the memory, wherein the computer executable components comprise:
a power supply component that powers respective in-wheel electric machines of a vehicle, the power supply component comprising an array of battery cells that are partitioned into groups comprising a first group of cells configured to power a first in-wheel electric machine of the vehicle and a second group of cells configured to power a second in-wheel electric machine of the vehicle; and
an operation control component that initiates one of a group of different operating modes relating to the power supply component based on a state of a group of relays that are electrically coupled to the power supply component.

2. The system of claim 1, wherein the power supply component independently powers the respective in-wheel electric machines and the array of battery cells is partitioned into a number of groups corresponding to a number of in-wheel electric machines of the vehicle, wherein a given group of cells is configured to exclusively power an associated in-wheel electric machine.

3. The system of claim 1, wherein the first group of cells power the first in-wheel electric machine and a third in-wheel electric machine of the vehicle that differs from the second in-wheel machine that is powered by the second group of cells.

4. The system of claim 1, wherein the first group of cells and the second group of cells comprise respective onboard power transforming devices that transforms current delivered to the respective in-wheel electric machines to alternative current.

5. The system of claim 1, wherein the power supply component is situated in a sprung weight portion of the vehicle resulting in a weight of the power supply component being supported by a suspension system of the vehicle.

6. The system of claim 1, wherein the respective in-wheel electric machines are situated in an unsprung weight portion of the vehicle resulting in a weight of the respective in-wheel electric machines not being supported by a suspension system of the vehicle.

7. The system of claim 1, wherein the group of different operating modes comprises a direct current charging mode in which at least a portion of battery devices associated with the power supply component is charged via a direct current connection.

8. The system of claim 1, wherein the group of different operating modes comprises a single phase charging mode in which at least a portion of the battery devices associated with the power supply component is charged via a single alternating current connection or wherein the group of different operating modes comprises a multi-phase charging mode in which at least a portion of the battery devices associated with the power supply component is charged via multiple alternating current connections.

9. The system of claim 1, wherein the group of different operating modes comprises a two-wheel drive mode in which the power supply component provides the alternating current output to two of the multiple different in-wheel electric machines or wherein the group of different operating modes comprises an all-wheel drive mode in which the power supply component provides the alternating current output to more than two of the multiple different in-wheel electric machines.

10. A non-transitory machine-readable medium, comprising executable instructions that, when executed by a processor, facilitate performance of operations, comprising:
delivering first alternating current power, sourced from a first portion of a battery array, to a first in-wheel hub motor of a vehicle;
delivering second alternating current power, sourced from a second portion of the battery array that excludes the first portion, to a second in-wheel hub motor of the vehicle; and
changing a state of a group of relays that are electrically coupled to the battery array to facilitate different operating modes associated with charging the batteries or operating the first in-wheel hub motor or the second in-wheel hub motor.

11. The non-transitory machine-readable medium of claim 10, wherein the first in-wheel hub motor and the second in-wheel hub motor are situated in an unsprung portion of the vehicle resulting in a weight of the first in-wheel hub motor and the second in-wheel hub motor not being supported by a suspension system of the vehicle.

12. The non-transitory machine-readable medium of claim 10, wherein the battery array and a power transforming system that transforms direct current output from the battery array to the first alternating current and the second alternating current provided to the first in-wheel hub motor and the second in-wheel hub motor are situated in a sprung portion of the vehicle, resulting in a weight of the battery array and the power transforming system being supported by a suspension system of the vehicle.

13. The non-transitory machine-readable medium of claim 10, wherein the operations comprise changing the state of the group of relays to a first charging state that facilitates charging the batteries via direct current, a second charging state that facilitates charging the batteries via a single alternating current connector, or a third charging state that facilitates charging the batteries via multiple alternating current connectors.

14. The non-transitory machine-readable medium of claim 10, wherein the operations comprise changing the state of the group of relays to a first driving state that facilitates operation of the in-wheel hub motor in accordance with two-wheel drive operation, or a second driving state that facilitates a second driving state that facilitates operation of the in-wheel hub motor in accordance with all-wheel drive operation.

15. A method, comprising:
transmitting, by a device comprising a processor, first alternating current power, sourced from a first group of battery cells, to a first in-wheel hub motor that controls a first wheel of a vehicle;
transmitting, by the device, second alternating current power, sourced from a second group of battery cells excluding the first group of battery cells, to a second in-wheel hub motor that controls a second wheel of the vehicle; and
modifying, by the device, a state of a group of relays that are electrically coupled to the first group of battery cells and the second group of battery cells to facilitate different operating modes associated with charging the batteries or operating the first in-wheel hub motor or the second in-wheel hub motor.
